# EUROPÄISCHE PATENTSCHRIFT

(11) **EP 1 200 314 B1**
(45) Veröffentlichungstag und Bekanntmachung des Hinweises auf die Patenterteilung: **03.03.2004**
(21) Anmeldenummer: 00943457.2
(22) Anmeldetag: 03.07.2000
(51) Int. Cl.: B65D 51/18, B65D 51/02, B65D 43/02

(54) **BEHÄLTER, INSBESONDERE FÜR SPEISEN**
CONTAINER, ESPECIALLY FOR FOOD
CONTENANT, NOTAMMENT POUR ALIMENTS

(30) Priorität: 29.07.1999 AT 131499
(43) Veröffentlichungstag der Anmeldung: 02.05.2002
(73) Patentinhaber: Thermo Vision Entwicklungs- und Handels GmbH, 8074 Grambach/Graz (AT)
(72) Erfinder: KLINGER, Gerald, A-8043 Graz (AT)
(74) Vertreter: Heger, Georg, Dipl.-Ing., Dr.
(86) Internationale Anmeldenummer: PCT/AT2000/000181
(87) Internationale Veröffentlichungsnummer: WO 2001/008995

(56) Entgegenhaltungen:
- GB-A- 2 086 862
- GB-A- 2 121 673
- US-A- 3 337 077
- US-A- 4 147 277
- US-A- 5 065 889

## Beschreibung

Die Erfindung betrifft einen Zusatzdeckel für einen ein Gefäß und einen Deckel enthaltenden Behälter, insbesondere für Speisen, eine Gefäßeinheit, beinhaltend ein Gefäß und einen derartigen Zusatzdeckel, und einen Behälter, insbesondere für Speisen, beinhaltend eine solche Gefäßeinheit, und einen zum Verschließen des Gefäßes auf den Rand des Gefäßes auflegbaren Deckel, wobei der Deckel mit einer ins Gefäß ragenden umlaufenden Tauchkante versehen ist, welche in die umlaufende Stufe des Gefäßes ragt und wobei das Gefäß und der Deckel aus festem Material besteht.

Bei herkömmlichen Behältern zum Aufbewahren und Transportieren von Speisen besteht meist zumindest der Deckel aus elastischem Kunststoff. Durch einen relativ hohen Kraftaufwand ist es möglich, den Behälter zu schließen. Insbesondere alten, kranken oder behinderten Menschen bereitet das Schließen und Öffnen solcher Behälter große Schwierigkeiten. Darüber hinaus ist häufig die Reinigung des Behälters oder zumindest des aus elastischem Kunststoff hergestellten Deckels nur bis zu einer gewissen Maximaltemperatur möglich, sodass diese für manche Anwendungen, z.B. im Krankenhausbereich, nicht in Frage kommen. Werden die Bestandteile eines solchen Behälters unzulässig hohen Temperaturen ausgesetzt, so kann es zu Verformungen kommen, welche ein Abdichten des Behälters unmöglich machen. Auch durch Materialermüdung kann es zu solchen Erscheinungen kommen.

Ferner existieren Speisenthermosbehälter aus Metall, welche einen Deckel aufweisen, der auf das Gefäß aufgeschraubt wird. Zusätzlich weist der Deckel in der Regel eine Gummiabdichtung auf.

Die US 4 147 277 A zeigt einen Behälter für Speisen, bestehend aus einem Gefäß mit einer durch einen Rand begrenzten Öffnung und einem zum Verschließen des Gefäßes auf den Rand des Gefäßes auflegbaren Deckel, wobei der Deckel mit einer ins Gefäß ragenden umlaufenden Tauchkante versehen ist.

Insbesondere die leichtere Öffenbarkeit wurde durch Konstruktionen verbessert, bei denen der Deckel des Behälters einfach auf das Gefäß aufgelegt wird. Die Dichtheit wird durch elastische Dichtelemente geschaffen. Beispielsweise ist in der WO 97/19002 A1 ein Behälter für Speisen beschrieben, der verbesserte Abdichtmaßnahmen aufweist. Zu diesem Zweck weist der Bodenteil des Behälters eine Vertiefung und der Deckteil einen elastischen Dichtungsschenkel auf, wobei an dem elastischen Dichtungsschenkel ein vorzugsweise spitz zulaufender Vorsprung vorgesehen ist, der zum Abdichten des Boden- und Deckteils gegen die Wandung der Vertiefung gedrückt wird. Abgesehen von der relativ aufwendigen Konstruktion weisen die aus elastischem Material hergestellten Bestandteile des Behälters die oben erwähnten Nachteile der begrenzten Reinigbarkeit oder begrenzten chemischen Beständigkeit auf.

Die US 3 337 077 A beschreibt einen Speisenbehälter, bestehend aus einem Gefäß und einem auf dieses Gefäß auflegbaren Deckel mit einer ins Gefäß ragenden Tauchkante. Das Gefäß und der Deckel sind aus hitzebeständigem Material, wie Glas, hergestellt, weshalb eine nur beschränkte Dichtheit gewährleistet ist. Mittels eines optionalen Zusatzdeckels aus flexiblem Material wird dieser Nachteil vermieden. Allerdings kann der Zusatzdeckel nur mit Kraftaufwand geöffnet und verschlossen werden.

Die EP 0665 171 A1 beschreibt einen wiederverschließbaren Behälter, welcher eine innenseitige Stufe am Rand des Gefäßes aufweist. Darüber hinaus zeigt der Rand des Gefäßes über der Stufe eine Ausbuchtung, in welche eine entsprechende Nut des Deckels einschnappen kann. Zwingend erforderlich für die Funktion dieses Behälters ist eine gewisse Elastizität des Deckels, weshalb die Möglichkeit der Verwendung eines festen Materials, wie Glas oder Porzellan, und die damit verbundenen Vorteile ausscheiden. Darüber hinaus müssten die Teile relativ präzise angefertigt werden und es sind nur sehr geringe Fertigungstolerazen zugelassen.

Die CH 631 935 A5 beschreibt ein Speisetransportgefäß, welches einen besonderes gestalteten Dichtungsring aufweist, der am Außenrand des Deckels aufvulkanisiert ist. Diese Konstruktion erfordert den Einsatz von elastischen Kunststoffen zur Erzielung der notwendigen Dichtheit.

Aus der US 5 810 197 A geht ein Kunststoffbehälter mit Deckel hervor, mit dem ein hermetischer Verschluss erzielt werden soll. Die Öffnung des Kunststoffbehälters erfolgt über eine am Deckel angebrachte Lasche, über die der gezwungenermaßen aus flexiblem Material hergestellte Deckel vom Behälter abgezogen werden kann.

Das Abdichten von Behältern mittels elastischen Bestandteilen oder elastischen Dichtelementen lässt nur kleine geometrische Toleranzen zu. Andernfalls ist ein Verschluss des Behälters gar nicht oder nur mit großem Kraftaufwand möglich. Die geforderte Präzision in der Fertigung schlägt sich natürlich in den Herstellungskosten nieder. Der Fertigungsaufwand von Behältern, welche starre und elastische Kunststoffe kombinieren ist meist sehr hoch, da Einlegeteile gefertigt werden müssen oder eine entsprechend aufwendige Spritzgußform für zwei Komponenten gebaut werden muss. Zudem stellt die Zuverlässigkeit der Verbindung elastischer mit starren Kunststoffen ein Problem dar, da nur wenige und meist sehr teure Materialien existieren. Für Polypropylen existiert derzeit beispielsweise kein geeignetes elastisches Kunststoffmaterial.

Aufgabe der vorliegenden Erfindung ist daher die Schaffung eines Zusatzdeckels der angegebenen Art, einer Gefäßeinheit und eines Behälters, durch die der Transport von Flüssigkeiten, insbesondere flüssigen Speisen, ohne Verschütten des Inhalts möglich wird. Darüber hinaus sollen der Zwischendeckel bzw. die Gefäßeinheit bzw. der Behälter möglichst leicht ohne Kraftaufwand öffenbar und verschließbar sein. Die Konstruktion soll größere Fertigungstoleranzen zulassen und somit billig sein. Die Anwendung soll auch bei festen Materialien, wie zum Beispiel Porzellan- oder Metallgeschirr ohne Einsatz von elastischen Kunststoffen möglich sein. Auf eine möglichst gute Reinigbarkeit auch bei hohen Temperaturen sollte ebenfalls ein besonderes Augenmerk gesetzt werden.

Gelöst wird die erste erfindungsgemäße Aufgabe durch einen oben angegebenen Zusatzdeckel, wobei randseitig ein zur Auflage auf einer innenseitigen auf einem konstanten Niveau umlaufenden Stufe des Randes des Gefäßes auflegbarer umlaufender Flansch angeordnet ist, und anschließend an den randseitigen umlaufenden Flansch eine bezüglich der dem Gefäß zuzuwendenden Seite konkave umlaufende Wölbung angeordnet ist. Durch den erfindungsgemäßen Flansch ist es möglich, den Zusatzdeckel einfach auf den Rand des Gefäßes aufzulegen, wodurch dieses ohne Kraftaufwand geöffnet werden kann. Durch die anschließend an den randseitigen umlaufenden Flansch angeordnete Wölbung wird erzielt, dass beim Transport des Behälters die am Rand des Gefäßes hochlaufende Flüssigkeit umgelenkt und wieder zurück in das Gefäß gezwungen wird.

Wenn der Zusatzdeckel aus starrem Material, beispielsweise Kunststoff, keramischem Material, insbesondere Porzellan oder Glas hergestellt ist, können die Herstellungskosten niedrig gehalten werden. Darüber hinaus sind diese Materialien besonders gut und auch mit höheren Temperaturen reinigbar und chemisch besonders beständig, so dass beispielsweise auch eine Sterilisierung mit bestimmten Mitteln möglich ist. Geeignete Kunststoffe sind beispielsweise Polypropylen (PP), Polyethylen (PE), Polyamid (PA), Polysulfon (PSU), Polystyrol (PS), Polycarbonat (PC), Polyoxymethylen (POM), Poly-Äthylenglykol-Terephtalat (PET), Acrylnitril-Butadien-Styrol-Copolymere (ABS), Polybuten (PBT), Poly-Phenylen-Sulfid (PPS), Poly-Phenylenoxid (PPO), Polyvinylchlorid (PVC, PVC-U) oder Cellulose-Acetat (CA).

Zur besseren Handhabung weist der Zusatzdeckel zumindest eine Griffmulde od. dgl. auf. Sofern der dafür notwendige Platz vorhanden ist, kann natürlich anstelle einer Griffmulde auch ein Griff vorgesehen sein.

Wenn gemäß einem weiteren Erfindungsmerkmal der Zusatzdeckel an der dem Gefäß weggewandten Seite eine Ausformung od. dgl. zur Ausübung einer vom Eigengewicht eines Deckels herrührenden Druckkraft auf den Zusatzdeckel aufweist, ist eine zusätzliche Verbesserung der Abdichtung erzielbar.

Zur Erhöhung der Stabilität des Zusatzdeckels, insbesondere bei der Verwendung von Kunststoff, ist eine vorzugsweise ringförmige Versteifung vorgesehen.

Um zu vermeiden, dass sich der Zusatzdeckel am Gefäß durch einen darin herrschenden Unterdruck ansaugt, ist vorzugsweise vorgesehen, dass am Zusatzdeckel zumindest ein Loch angeordnet ist. Dadurch wird das Abheben des Zusatzdeckels ohne Kraftaufwand ermöglicht.

Ebenso ist es möglich, dass der Zusatzdeckel lediglich durch einen Ring gebildet wird, der vorzugsweise die oben erwähnte konkave Wölbung aufweist und dadurch eine Ausschütten des Inhalts des Gefäßes verhindert. Das Abheben eines derartig ausgebildeten Zusatzdeckels ist besonders einfach.

Um ein Übereinanderstapeln der mit einem Zusatzdeckel versehenen Gefäße zu erzielen, ist gemäß einem weiteren Merkmal der Erfindung vorgesehen, dass am Zusatzdeckel eine randseitig begrenzte Auflagefläche für die Standfläche eines Gefäßes angeordnet ist. Die randseitige Begrenzung kann beispielsweise durch einen Teil der oben beschriebenen konkaven Wölbung im Zusatzdeckel gebildet sein.

Zur Erzielung eines platzsparenden und vor Verrutschen sicheren Stapelns der Zusatzdeckel untereinander sind am Zusatzdeckel Stapelvertiefungen bzw. Stapelvorsprünge vorgesehen. Diese können durch die oben genannte umlaufende Wölbung, die Griffmulde od. dgl. oder die Ausformungen od. dgl. gebildet sein. Zur Erzielung der Stapelbarkeit müssen die entsprechenden Ausformungen am Zusatzdeckel konisch ausgebildet sein.

Gelöst wird die erfindungsgemäße Aufgabe auch durch eine Gefäßeinheit, beinhaltend ein Gefäß und einen oben beschriebenen Zusatzdeckel, wobei der Rand des Gefäßes innenseitig mit mindestens einer auf einem konstanten Niveau umlaufenden Stufe versehen ist.

Gelöst wird die erfindungsgemäße Aufgabe auch durch einen oben genannten Behälter, wobei die Innenwand des Gefäßes und die Innenfläche der Tauchkante des Deckels bündig ineinander übergehen und der Zusatzdeckel zwischen der Stufe des Randes des Gefäßes und der Tauchkante des Deckels einlegbar ist. Durch diese Konstruktion ist es möglich, einen dichten Behälter, insbesondere für Speisen zu schaffen, der dennoch ohne Kraftaufwand öffen- und wieder verschließbar ist. Dadurch eignet sich der Behälter besonders für den Transport von Speisen beispielsweise in Krankenhäusern oder Pflegeheimen, wo die Gefäße mitunter von älteren oder behinderten Personen geöffnet werden sollen. Die erfindungsgemäße Ausgestaltung erfordert keine besonders präzise Fertigung, wodurch die Herstellungskosten gering gehalten werden können. Auch ist es auf Grund der erfindungsgemäßen Konstruktion möglich, die Bestandteile des Behälters aus hartem Material, z.B. Keramik wie Porzellan herzustellen und dennoch, ohne die Verwendung von elastischen Dichtungselementen die geforderte Dichtheit zu erzielen. Keramische Materialien sind wiederum sehr gut reinigbar und beständig, wodurch sich diese für eine Anwendung insbesondere in Krankenhäusern oder Pflegeheimen besonders eignen. Durch die umlaufende Anordnung der Stufe od. dgl. des Randes des Gefäßes und vorteilhafterweise der Tauchkante ist eine Abdichtung entlang der gesamten Gefäßöffnung gegeben.

Gemäß einem weiteren Merkmal der Erfindung gehen die Innenwand des Gefäßes und der daran anschließende Teil des Zusatzdeckels bündig ineinander über. Die erfindungsgemäße Stufe am Gefäßrand bildet eine Art "Wellenbrecher" für eine allfällige Flüssigkeitswelle. Die Hauptenergie der Welle wird entlang der Innenseite der Tauchkante in Richtung Deckteil gelenkt und somit ein Austreten der Flüssigkeit durch den auf Grund der Fertigungstoleranzen gebildeten Spalt zwischen Gefäß und Deckel weitestgehend verhindert. Der Zusatzdeckel liegt einfach auf der Stufe auf und wird durch sein Eigengewicht und die kapillare Wirkung der Flüssigkeit festgehalten und bietet einen zusätzlichen Schutz vor Ausrinnen der im Behälter transportierten Flüssigkeit.

Vorteilhafterweise ist der Deckel und bzw. oder das Gefäß aus kramischem Material, insbesondere aus Porzellan, hergestellt. Speisegefäße aus einem derartigen Material zeigen höchste Akzeptanz.

Ebenso können der Deckel und bzw. oder das Gefäß auch aus Glas hergestellt sein.

Die Merkmale der vorliegenden Erfindung und deren Vorteile werden an Hand der beigefügten Abbildungen näher erläutert. Darin zeigen
- Fig. 1a bis 1c Fig. 2: herkömmliche Speisenbehälter im Querschnitt, eine Ausführungsform eines erfindungsgemäßen
- Fig. 3a und 3b: Speisenbehälters im Querschnitt, Detailansichten möglicher Ausführungsformen der Erfindung,
- Fig. 4 und 5: Draufsicht und Querschnitt eines Zusatzdeckels für einen Speisenbehälter,
- Fig. 6 und 7: die Draufsicht und den Querschnitt eines ringförmig ausgebildeten Zusatzdeckels,
- Fig. 8: zwei übereinandergestapelte Zusatzdeckel im Querschnitt, und
- Fig. 9: zwei mit einem Zusatzdeckel versehene, aufeinandergestapelte Gefäße im Querschnitt.

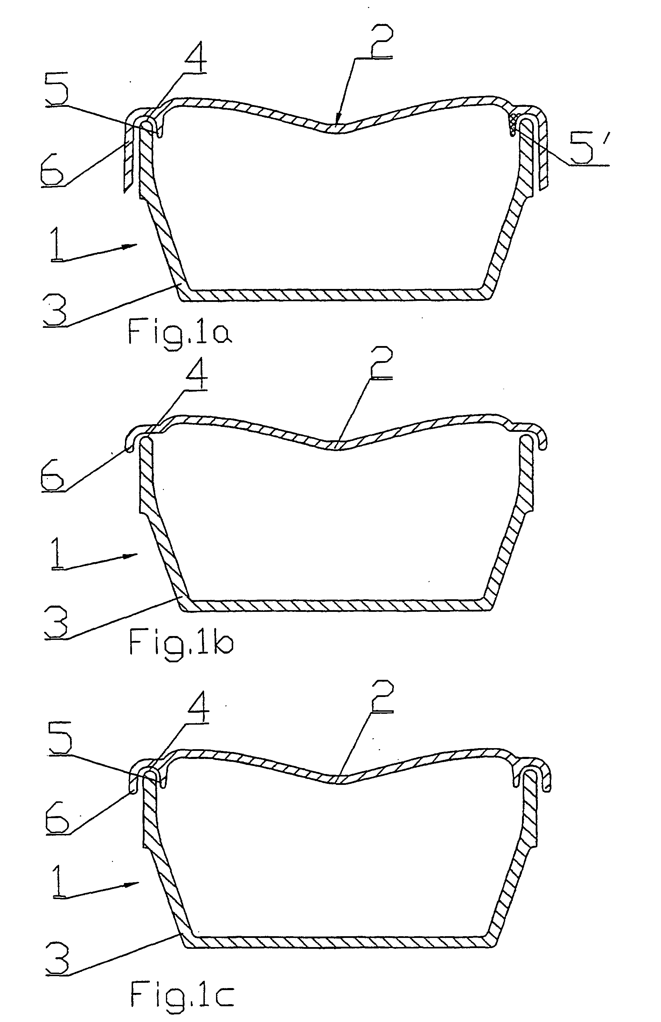

Fig. 1a zeigt eine Ausführungsform eines Behälters 1, bestehend aus einem Deckel 2 und einem Gefäß 3 zur Aufnahme beispielsweise der Speisen. Der Deckel 2 kann einen Griff oder eine Griffmulde zur Besseren Öffnung aufweisen (nicht dargestellt). Das Gefäß 3 weist eine durch einen Rand 4 begrenzte, meist kreisförmige Öffnung auf. Der Deckel 2 wird auf den Rand 4 aufgelegt, sodass das Gefäß 3 verschlossen wird. Um ein Verrutschen des Deckels 2 einerseits aber auch das Auslaufen insbesondere flüssiger Inhalte, wie flüssiger Speisen oder Speisenteile während eines Transports des Behälters 1 zu vermeiden, ist an der, dem Gefäß 3 zugewandten Seite des Deckels 2 eine Tauchkante 5 vorgesehen. Die vorzugsweise umlaufende Tauchkante 5 ragt vom Deckel 2 ins Innere des Gefäßes 3 und liegt möglichst eng an dem Rand 4 des Gefäßes 3 an, sodass ein möglichst geringer Spalt zwischen Deckel 2 und Gefäß 3 frei bleibt. Wenn der Behälter aus starrem Material, wie zum Beispiel Porzellan oder Metall hergestellt ist, müssen der Deckel 2 und das Gefäß 3 insbesondere an jenen Stellen, welche beim Verschließen aneinander gepasst werden, möglichst präzise gefertigt sein, um ausreichende Dichtheit zu erzielen. Dies bedingt natürlich relativ hohe Herstellungskosten. Eine gute Dichtheit kann aber auch dadurch erreicht werden, indem Teile des Behälters 1, zumindest der Deckel 2 oder die Tauchkante 5' aus elastischem Material hergestellt werden. Durch die Elastizität der Bestandteile werden etwas größere Herstellungstoleranzen zugelassen und durch entsprechende Verformung eine gute Dichtheit erzielt. Fig. 1b zeigt eine Variante eines Behälters 1 gemäß dem Stand der Technik, bei dem anstelle einer Tauchkante 5 am Deckel 2 nur der Rand 6 umgebogen ist, sodass dieser den Rand 4 des Gefäßes 3 möglichst dicht umfasst. In Fig. 1c ist eine Kombination der Konstruktionen gemäß der Fig. 1a und Fig. 1b dargestellt. Der Deckel 2 umfasst sowohl eine Tauchkante 5 als auch einen in Richtung des Gefäßes 6 umgebogenen Rand 6. Dadurch wird der Rand 4 des Gefäßes 3 außenseitig vom Rand 6 des Deckels 2 und innenseitig von dessen Tauchkante 5 umschlossen. Präzision bei der Herstellung und/oder Verwendung elastischer Materialien bewirken eine sehr gute Abdichtung des Behälters. Allerdings ist der zum Öffnen und Verschließen des Behälters erforderliche Handhabungs- und Kraftaufwand meist so hoch, dass eine Verwendung für ältere oder behinderte Personen unmöglich ist. Dadurch scheiden solche Konstruktionen beispielsweise für die Speisenverteilung im Spitals- oder Pflegebereich aus. Darüber hinaus ist die Konstruktion gemäß Fig. 1c schwer reinigbar, da die Nut zwischen der Tauchkante 5 und dem Rand 6 des Deckels 2 nur schwer zugänglich ist und sich darin Speisereste und Bakterien anlagern können. Die Anwendung besonders präzise hergestellter Behälter aus Porzellan oder Metall od. dgl. scheitert meist an den hohen Kosten. Billigere Produktionen zeigen hingegen unzureichende Dichtheit.

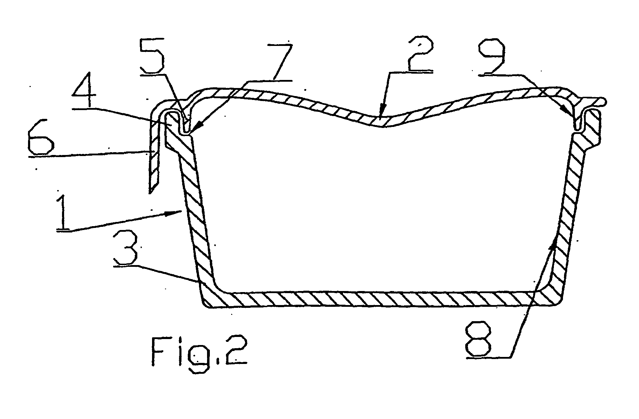

Fig. 2 zeigt eine Ausführungsform der Erfindung im Querschnitt. Der Behälter 1 besteht aus einem Deckel 2 und einem Gefäß 3, dessen Öffnung durch einen Rand 4 begrenzt wird. Der Deckel 2 weist eine vorzugsweise umlaufende Tauchkante 5 auf, welche ins Innere des Gefäßes 3 ragt. Der Rand 6 des Deckels 2 kann, wie im linken Teil der Abbildung dargestellt, nach unten abgebogen sein, oder wie im rechten Teil des Bildes dargestellt, waagrecht enden.

Erfindungsgemäß ist der Rand 4 des Gefäßes 3 innenseitig mit einer Stufe 7 od. dgl. versehen, in welche die Tauchkante 5 des Deckels 2 ragt. Außenseitig kann der Rand 4 der Form der Stufe 7 folgen oder auch glatt verlaufen. Die dargestellte stufenförmige Außenseite des Gefäßes 3 kann aber Vorteile in Bezug auf die Handhabung haben. Anstelle einer, wie hier dargestellt einzigen Stufe 7 können auch mehrstufige Ausgestaltungen des Randes 4 des Gefäßes 3 vorgesehen sein, wodurch aber auch die Anforderungen an die Fertigungstoleranzen steigen.

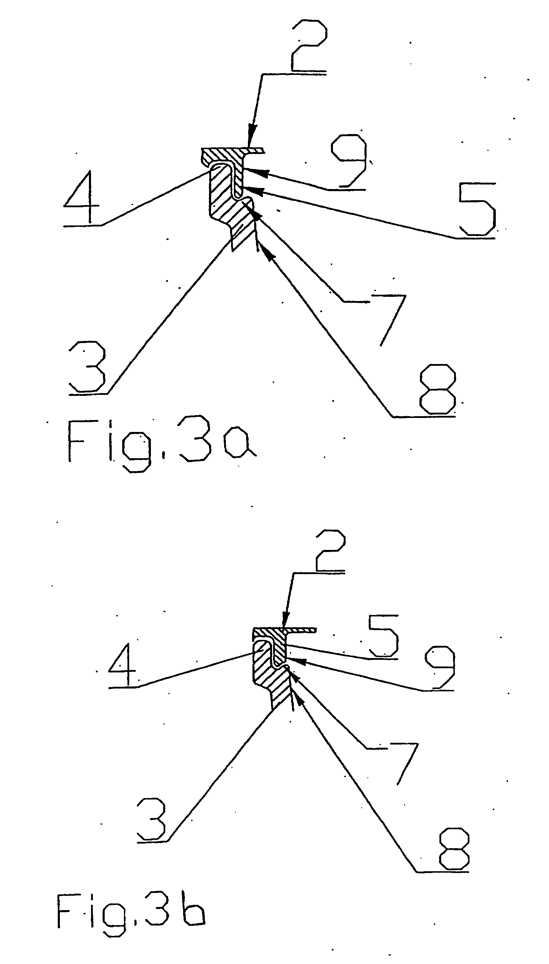

Die Figuren 3a und 3b zeigen zwei weitere Ausführungsformen der Verbindung zwischen Deckel 2 und Gefäß 3 des Behälters 1. Bei der Variante gemäß Fig. 3a ist die Stufe 7 am Rand 4 des Gefäßes 3 mit einer innenliegenden Vertiefung ausgestattet, in welche die Tauchkante 5 des Deckels 2 eingreift. In diesem Fall ist kein stetiger Übergang zwischen Innenwand 8 des Gefäßes 3 und Innenfläche 9 der Tauchkante 5 gegeben. Der Innendurchmesser des Gefäßes 3 ist in diesem Fall kleiner als der Durchmesser der Innenfläche 9 der Tauchkante 5. Schließlich zeigt Fig. 3b eine weitere Ausführungsvariante, bei welcher sowohl die Stufe 7 als auch die Tauchkante 5 im Querschnitt zweistufig ausgebildet ist. In diesem Fall bildet die Innenwand 8 des Gefäßes 3 mit der Innenfläche 9 der Tauchkante 5 wieder einen stetigen Übergang.

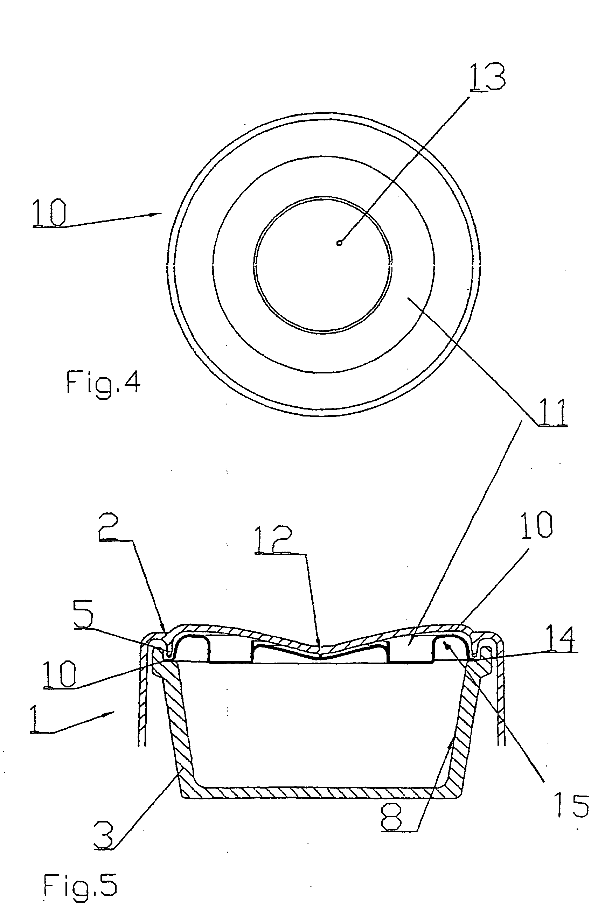

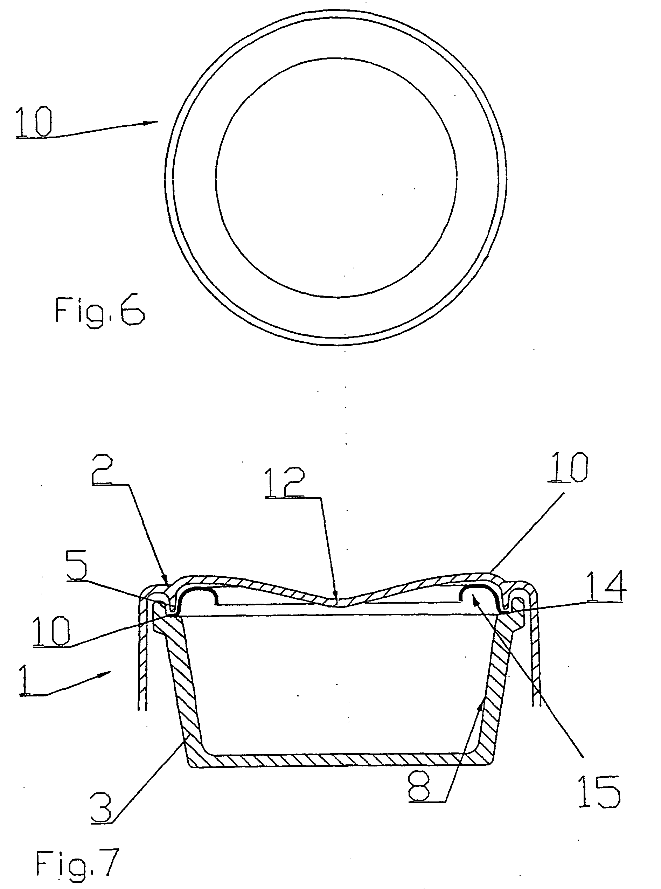

Die Fig. 4 und 5 zeigen einen Zusatzdeckel für einen Behälter 1, welcher vorteilhafterweise aus starrem Material hergestellt ist, liegt auf der Stufe 7 des Randes 4 des Gefäßes 3 auf. Darüber wird, wie bei der Ausführung gemäß Fig. 2 der Deckel 2 gelegt. Durch das Eigengewicht des Zusatzdeckels 10 und die kapillare Wirkung der Flüssigkeit wird der Zusatzdeckel 10 gehalten. Durch entsprechende Formgebung kann auch das Gewicht des Deckels 2 zu einem besseren Halt des Zusatzdeckels 10 beitragen, indem zumindest ein Teil des Deckels 2 auf eine entsprechend gestaltete Ausformung 12 des Zusatzdeckels 10 drückt und somit ausreichenden Anpressdruck verursacht, sodass der Spalt zwischen Deckel 2 und Gefäß 3 ausreichend abgedichtet und ein Auslaufen der Flüssigkeit verhindert wird. Zur Verstärkung der Abdichtwirkung ist der Übergang von der Innenwand 8 des Gefäßes 3 zur Innenwand des Zusatzdeckels 10 bündig ausgebildet, sodass sich im geschlossenen Behälter 1 eine glatte Oberfläche bildet. Zur besseren Handhabung kann im Zusatzdeckel eine Griffmulde 11 z.B. in Kreisform vorgesehen sein. Der Zusatzdeckel 10 kann aus Keramik, Glas, Metall aber auch steifem Kunststoff hergestellt werden. Durch besondere Materialwahl kann auch eine bessere Wärmeisolierung der Speisen erzielt werden. Zum Druckausgleich können am Zusatzdeckel 10 Löcher 13 vorgesehen sein. Dadurch wird verhindert, dass ein Abheben des Zusatzdeckels 10 durch einen Unterdruck im Gefäß 3 erschwert wird. Randseitig ist am Zusatzdeckel 10 ein ringförmiger Flansch 14 angeordnet, der auf die Stufe 7 des Randes 4 des Gefäßes 3 aufgelegt wird. Anschließend an den randseitigen Flansch 14 ist eine bezüglich der dem Gefäß 3 zuzuwendenden Seite des Zusatzdeckels 10 konkave Wölbung 15 vorgesehen, die allfällige Flüssigkeitswellen gezielt umlenkt und somit ein Auslaufen der Flüssigkeit aus dem Gefäß 3 wirkungsvoll verhindert.

Die Fig. 6 und 7 zeigen einen gegenüber den Figuren 4 und 5 abgeänderten Zusatzdeckel 10 in Form eines Ringes. Vorteilhafterweise weist der Zusatzdeckel 10 den randseitigen Flansch 14 und die konkave, ringförmige Wölbung 15 auf. Ein Abheben des Zusatzdeckels 10 vom Gefäß 3 ist in einfacher Weise durch einen Griff ins Innere den Zusatzdeckel 10 darstellenden Ringes möglich. Dennoch wird durch die Wölbung 15 eine hohe Sicherheit vor Ausfließen des Inhalts des Gefäßes 3 erzielt.

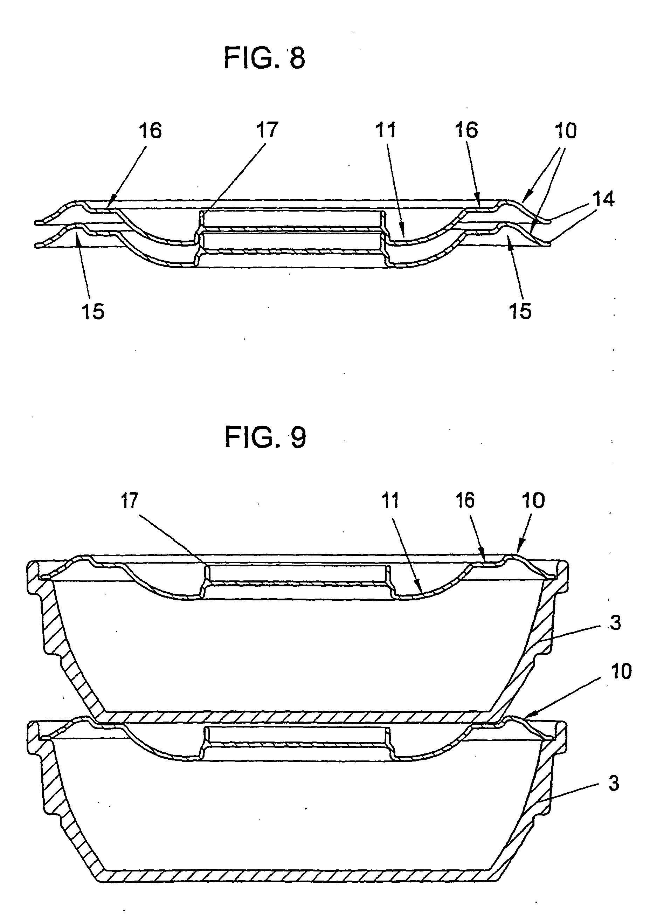

Fig. 8 zeigt die Ausbildung eines Zusatzdeckels im Querschnitt, die zur Stapelbarkeit der Zusatzdeckel 10 geeignet ist. Dementsprechend sind Stapelvertiefungen bzw. Vorsprünge vorgesehen, die eine platzsparende und vor Verrutschen sichere Stapelbarkeit der Zusatzdeckel 10 ermöglicht. Im dargestellten Beispiel ist in der Mitte des Zusatzdeckels 10 eine ringförmige Versteifung 17 vorgesehen, welche im Anschluss an eine ringförmige Griffmulde 11 angeordnet ist. Dadurch wird ein Abheben des Zusatzdeckels 10 vom Gefäß 3 erleichtert. Gleichzeitig wird die ringförmige Versteifung 17 zum Ineinanderstapeln der Zusatzdeckel 10 verwendet, indem dieser in eine entsprechende kreisförmige Ausnehmung an der Unterseite des Zwischendeckels 10 ragt. Zur Erzielung einer leichten Stapelbarkeit müssen die entsprechenden Vorsprünge konisch ausgebildet sein.

Fig. 9 zeigt zwei mit einem Zusatzdeckel 10 ausgestattete Gefäße 3, welche übereinander gestapelt sind. Zu diesem Zweck ist der Zusatzdeckel 10 mit einer ringförmigen Auflagefläche 16 versehen, welche randseitig durch die ringförmige Wölbung 15 begrenzt ist und somit ein Verrutschen des darauf abgestellten Gefäßes 3 verhindert. Die ringförmige Versteifung 17 ist unterhalb der Auflagefläche 16 angeordnet.

Die vorliegenden Darstellungen zeigen nur einige Ausführungsformen der Erfindung. Abänderungen sind im Rahmen der Erfindung selbstverständlich möglich. Beispielsweise können zusätzlich elastische Dichtungselemente, wie Dichtungsringe od. dgl. in an sich bekannter Weise angewandt werden und zum Beispiel auf die Stufe 7 des Randes 4 des Gefäßes 3 aufgelegt oder eingesetzt werden. Auch ist die erfindungsgemäße Konstruktion nicht auf runde Behälter beschränkt, sondern auch auf andere, beispielsweise rechteckige, Formen anwendbar.

## Patentansprüche

1. Zusatzdeckel für einen, ein Gefäß (3) und einen Deckel (2) enthaltenden Behälter, insbesondere für Speisen, **dadurch gekennzeichnet, dass** randseitig ein zur Auflage auf einer innenseitigen auf einem konstanten Niveau umlaufenden Stufe (7) des Randes (4) des Gefäßes (3) auflegbarer umlaufender Flansch (14) angeordnet ist und dass anschließend an den randseitigen, umlaufenden Flansch (14) eine bezüglich der dem Gefäß (3) zuzuwendenden Seite konkave, umlaufende Wölbung (15) angeordnet ist.

2. Zusatzdeckel nach Anspruch 1, **dadurch gekennzeichnet, dass** er aus starrem Material, beispielsweise Kunststoff, keramischem Material, insbesondere Porzellan oder Glas hergestellt ist.

3. Zusatzdeckel nach Anspruch 1 oder 2, **dadurch gekennzeichnet, dass** zumindest eine Griffmulde (11) vorgesehen ist.

4. Zusatzdeckel nach einem der Ansprüche 1 bis 3, **dadurch gekennzeichnet, dass** an der, dem Gefäß (3) weggewandten Seite eine Ausformung (12) zur Ausübung einer vom Eigengewicht eines Deckels (2) herrührenden Druckkraft auf den Zusatzdeckel vorgesehen ist.

5. Zusatzdeckel nach einem der Ansprüche 1 bis 4, **dadurch gekennzeichnet, dass** eine vorzugsweise ringförmige Versteifung (17) vorgesehen ist.

6. Zusatzdeckel nach einem der Ansprüche 1 bis 5, **dadurch gekennzeichnet, dass** zumindest ein Loch (13) angeordnet ist.

7. Zusatzdeckel nach einem der Ansprüche 1 bis 5, **gekennzeichnet durch** eine ringförmige Ausbildung.

8. Zusatzdeckel nach einem der Ansprüche 1 bis 7, **dadurch gekennzeichnet, dass** eine randseitig begrenzte Auflagefläche (16) für die Standfläche eines Gefäßes (3) vorgesehen ist.

9. Zusatzdeckel nach einem der Ansprüche 1 bis 8, **dadurch gekennzeichnet, dass** Stapelvertiefungen bzw. Stapelvorsprünge vorgesehen sind.

10. Zusatzdeckel nach Anspruch 9 und 1, **dadurch gekennzeichnet, dass** die Stapelvertiefungen bzw. Stapelvorsprünge durch die umlaufende Wölbung (15) gebildet sind.

11. Zusatzdeckel nach Anspruch 9 und 3, **dadurch gekennzeichnet, dass** die Stapelvertiefungen bzw. Stapelvorsprünge durch die Griffmulde (11) gebildet sind.

12. Zusatzdeckel nach Anspruch 9 und 4, **dadurch gekennzeichnet, dass** die Stapelvertiefungen bzw. Stapelvorsprünge durch die Ausformungen (12) gebildet sind.

13. Gefäßeinheit, beinhaltend ein Gefäß (3) und einen Zusatzdeckel (10) nach einem der Ansprüche 1 bis 12, **dadurch gekennzeichnet, dass** der Rand (4) des Gefäßes (3) innenseitig mit mindestens einer auf einem konstanten Niveau umlaufenden Stufe (7) versehen ist.

14. Behälter, insbesondere für Speisen, beinhaltend eine Gefäßeinheit nach Anspruch 13, und einen zum Verschließen des Gefäßes (3) auf den Rand (4) des Gefäßes (3) auflegbaren Deckel (2), wobei der Deckel (2) mit einer ins Gefäß (3) ragenden, umlaufenden Tauchkante (5) versehen ist, welche in die umlaufende Stufe (7) des Gefäßes (3) ragt, und wobei das Gefäß (3) und der Deckel (2) aus festem Material besteht, **dadurch gekennzeichnet, dass** die Innenwand (8) des Gefäßes (3) und die Innenfläche (9) der Tauchkante (5) des Deckels (2) bündig ineinander übergehen und dass der Zusatzdeckel (10) zwischen der Stufe (7) des Randes (4) des Gefäßes (3) und der Tauchkante (5) des Deckels (2) einlegbar ist.

15. Behältereinheit nach Anspruch 14, **dadurch gekennzeichnet, dass** die Innenwand (8) des Gefäßes (3) und der daran anschließende Teil des Zusatzdeckels (10) bündig ineinander übergehen.

16. Behältereinheit nach Anspruch 14 oder 15, **dadurch gekennzeichnet, dass** der Deckel (2) und bzw. oder das Gefäß (3) aus keramischem Material, insb. aus Porzellan hergestellt ist.

17. Behältereinheit nach einem der Ansprüche 14 bis 16, **dadurch gekennzeichnet, dass** der Deckel (2) und bzw. oder das Gefäß (3) aus Glas hergestellt ist.

## Claims

1. An additional lid for a container comprised of a vessel (3) and a lid (2), in particular for food, **characterised in that** a continuous flange (14) is provided on the rim side, which continuous flange is capable of being rested on a constant-level inner continuous step (7) of the rim (4) of the vessel (3), and that the rim-side continuous flange (14) is followed by a continuous curve (15) which is concave relative to that side which is to face the vessel (3).

2. An additional lid according to claim 1, **characterised in that** it is made of a rigid material, e.g. plastics, a ceramic material, in particular porcelain or glass.

3. An additional lid according to claim 1 or 2, **characterised in that** at least one grip depression (11) is provided.

4. An additional lid according to any one of claims 1 to 3, **characterised in that** a moulding (12) for exerting a pressure force originating from the lid's (2) own weight on the additional lid is proivded on the side facing away from the vessel (3).

5. An additional lid according to any one of claims 1 to 4, **characterised in that** a preferably annular stiffening means (17) is provided.

6. An additional lid according to any one of claims 1 to 5, **characterised in that** at least one hole (13) is provided.

7. An additional lid according to any one of claims 1 to 5, **characterised by** an annular configuration.

8. An additional lid according to any one of claims 1 to 7, **characterised in that** a rim-side-delimited resting face (16) for the platform of a vessel (3) is provided.

9. An additional lid according to any one of claims 1 to 8, **characterised in that** stacking depressions, or stacking projections, respectively, are provided.

10. An additional lid according to claims 9 and 1, **characterised in that** the stacking depressions, or stacking projections, respectively, are formed by the continuous curve (15).

11. An additional lid according to claims 9 and 3, **characterised in that** the stacking depressions, or stacking projections, respectively, are formed by the grip depression (11).

12. An additional lid according to claims 9 and 4, **characterised in that** the stacking depressions, or stacking projections, respectively, are formed by the mouldings (12).

13. A vessel unit, comprising a vessel (3) and an additional lid (10) according to any one of claims 1 to 12, **characterised in that** the rim (4) of the vessel (3) inwardly is provided with at least one constant-level continuous step (7).

14. A container, in particular for food, comprising a vessel unit according to claim 13 and a lid (2) capable of being rested on the rim (4) of the vessel (3) so as to close the vessel (3), the lid (2) being provided with a continuous immersion edge (5) projecting into the vessel (3), which immersion edge projects into the continuous step (7) of the vessel (3), and the vessel (3) and the lid (2) being made of a said material, **characterised in that** the inner wall (8) of the vessel (3) and the inner surface (9) of the immersion edge (5) of the lid (2) merge flush into each other and that the additional lid (10) is insertable between the step (7) of the rim (4) of the vessel (3) and the immersion edge (5) of the lid (2).

15. A container unit according to claim 14, **characterised in that** the inner wall (8) of the vessel (3) and the consecutive part of the additional lid (10) merge flush into each other.

16. A container unit according to claim 14 or 15, **characterised in that** the lid (2) and/or the vessel (3) are made of ceramic material, in particular of porcelain.

17. A container unit according to any one of claims 14 to 16, **characterised in that** the lid (2) and/or the vessel (3) are made of glass.

## Revendications

1. Couvercle supplémentaire pour un contenant comprenant un récipient (3) et un couvercle (2), notamment pour des aliments, **caractérisé en ce qu'**une bride (14) périphérique est disposée côté bord, pouvant être posée pour l'appui sur un étage (7), côté intérieur et périphérique sur un niveau constant, du bord (4) du récipient (3) et **en ce qu'**une courbure (15) périphérique et concave par rapport au côté tourné vers le récipient (3) est disposée adjacente à la bride (14) côté bord et périphérique.

2. Couvercle supplémentaire selon la revendication 1, **caractérisé en ce qu'**il est fabriqué en un matériau rigide, par exemple du plastique, du matériau céramique, en particulier de la porcelaine ou du verre.

3. Couvercle supplémentaire selon la revendication 1 ou 2, **caractérisé en ce qu'**il est prévu au moins une poignée encastrée (11).

4. Couvercle supplémentaire selon l'une quelconque des revendications 1 à 3, **caractérisé en ce que**, sur le côté opposé au récipient (3), une partie formée (12) est prévue pour exercer sur le couvercle supplémentaire une force de pression provenant du poids propre d'un couvercle (2).

5. Couvercle supplémentaire selon l'une quelconque des revendications 1 à 4, **caractérisé en ce qu'**il est prévu un renfort (17) de préférence de forme annulaire.

6. Couvercle supplémentaire selon l'une quelconque des revendications 1 à 5, **caractérisé en ce qu'**au moins un trou (13) est aménagé.

7. Couvercle supplémentaire selon l'une quelconque des revendications 1 à 5, **caractérisé par** une réalisation de forme annulaire.

8. Couvercle supplémentaire selon l'une quelconque des revendications 1 à 7, **caractérisé en ce qu'**une surface de support (16) limitée côté bord est prévue pour la surface de base d'un récipient (3).

9. Couvercle supplémentaire selon l'une quelconque des revendications 1 à 8, **caractérisé en ce que** des cavités ou des saillies d'empilement sont prévues.

10. Couvercle supplémentaire selon les revendications 9 et 1, **caractérisé en ce que** les cavités ou les saillies d'empilement sont formées par la courbure (15) périphérique.

11. Couvercle supplémentaire selon les revendications 9 et 3, **caractérisé en ce que** les cavités ou les saillies d'empilement sont formées par la poignée encastrée (11).

12. Couvercle supplémentaire selon les revendications 9 et 4, **caractérisé en ce que** les cavités ou les saillies d'empilement sont formées par des évidements (12).

13. Unité de récipient comprenant un récipient (3) et un couvercle supplémentaire (10) selon l'une quelconque des revendications 1 à 12, **caractérisé en ce que** le bord (4) du récipient (3) est pourvu côté intérieur d'au moins un étage (7) périphérique sur un niveau constant.

14. Contenant, notamment pour des aliments, comprenant une unité de récipient selon la revendication 13, et un couvercle (2) pouvant être posé sur le bord (4) du récipient (3) pour la fermeture du récipient (3), le couvercle (2) étant pourvu d'un bord d'immersion (5) périphérique et dépassant dans le récipient (3), lequel bord dépasse dans l'étage (7) périphérique du récipient (3), et le récipient (3) et le couvercle (2) étant à base d'un matériau solide, **caractérisé en ce que** la paroi intérieure (8) du récipient (3) et la surface intérieure (9) du bord d'immersion (5) du couvercle (2) se confondent en venant en affleurement et **en ce que** le couvercle supplémentaire (10) peut être inséré entre l'étage (7) du bord (4) du récipient (3) et du bord d'immersion (5) du couvercle (2).

15. Unité de contenant selon la revendication 14, **caractérisé en ce que** la paroi intérieure (8) du récipient (3) et la partie s'y raccordant du couvercle supplémentaire (10) se confondent en venant en affleurement.

16. Unité de contenant selon la revendication 14 ou 15, **caractérisé en ce que** le couvercle (2) et/ou le récipient (3) est (sont) fabriqué(s) à base de matériau céramique, en particulier à base de porcelaine.

17. Unité de contenant selon l'une quelconque des revendications 14 à 16, **caractérisé en ce que** le couvercle (2) et/ou le récipient (3) est (sont) fabriqué(s) en verre.
